# EUROPÄISCHE PATENTSCHRIFT

(11) **EP 3 131 192 B1**
(45) Veröffentlichungstag und Bekanntmachung des Hinweises auf die Patenterteilung: **03.10.2018**
(21) Anmeldenummer: 15181147.8
(22) Anmeldetag: 14.08.2015
(51) Int. Cl.: H02M 7/00

(54) **STEUERVORRICHTUNG UND VERFAHREN ZUR STEUERUNG EINER SICHERHEITSRELEVANTEN KOMPONENTE**
CONTROL DEVICE AND METHOD FOR CONTROLLING A SAFETY-RELEVANT COMPONENT
DISPOSITIF DE COMMANDE ET PROCEDE DE COMMANDE D'UN COMPOSANT RELEVANT DE LA SECURITE

(43) Veröffentlichungstag der Anmeldung: 15.02.2017
(73) Patentinhaber: Thales Management & Services Deutschland GmbH, 71254 Ditzingen (DE)
(72) Erfinder: KLEMM, Rainer, 71711 Steinheim (DE); WEIß, Peter, 71686 Remseck (DE)
(74) Vertreter: Kohler Schmid Möbus Patentanwälte

(56) Entgegenhaltungen:
- WO-A2-02/15363
- US-B2- 8 937 822

## Beschreibung

### Hintergrund der Erfindung

Die Erfindung betrifft eine Steuervorrichtung sowie ein Verfahren zur Steuerung einer sicherheitsrelevanten Komponente.

Für die Steuerung von Systemen mit sicherheitsrelevanten Komponenten (z. B. Achszähler, Signallampen, Schranken usw.), insbesondere bei Eisenbahnsicherungsanlagen ist es wichtig, im Falle eines Ausfalls der sicherheitsrelevanten Komponente das System in einen sicheren Zustand zu überführen, um so die Sicherheit der Verkehrsteilnehmer zu gewährleisten.

Aus DE 3003291 C2 ist eine zweikanalige Datenverarbeitungsanordnung mit zwei dieselben Daten verarbeitenden Mikrokontrollern bekannt, wobei jeder Mikrokontroller einen Transformator steuert. Ein Taktsignal wandelt ein Gleichstromsignal in ein Wechselstromsignal um, so dass das Signal über den ersten Transformator übertragen werden kann. Danach kann der zweite Transformator mittels des zweiten Mikrokontrollers geschaltet werden. Eine Datenübertragung erfolgt nur, wenn beide Mikrokontroller ein Schaltsignal an den jeweiligen Transformator geben. Nachteilig an dieser Anordnung ist der hohe Hardwarebedarf, insbesondere hinsichtlich der Transformatoren, was mit hohen Kosten, großem Platzbedarf und schlechtem Wirkungsgrad verbunden ist.

Darüber hinaus ist ein Achszähler (Az LM) der Firma Thales Transportation Systems GmbH bekannt, der eine zweikanalige Steuervorrichtung mit parallelen Relaisschnittstellen aufweist. Diese Vorrichtung ist jedoch anfällig für Verschleiß und Vibrationen, wodurch Kontakte der Relais gelöst werden können. Zudem besteht die Gefahr, dass der Rückstellmechanismus der Relais verklemmt, so dass die benötigte Zuverlässigkeit nur mit einem hohen Aufwand an Wartung gewährleistet werden kann.

WO 02/15363 A2 offenbart eine Einrichtung zur Speicherung und Abgabe elektrischer Energie durch die Ladung und Entladung von mehreren Kondensatoren und/oder Batterien, wobei die Kondensatoren bzw. Batterien zur Ladung/Entladung in Serie in einen Gleichstromkreis geschaltet sind. Es sind erste Spannungsüberwachungsschaltungen für einzelne Kondensatoren bzw. Batterien vorgesehen sind und zusätzlich eine zweite Spannungsüberwachungsschaltung vorgesehen ist, welche mehrere der einzelweise überwachten Kondensatoren bzw. Batterien überwacht.

US 8 937 822 B2 offenbart ein 1-, 2- oder 3-phasiges DC/AC-Wandlersystem zur Reduzierung der Kosten von Solaranlagen, wobei die Kostenreduzierung durch Wegfall von Niederfrequenz-Leistungstransformatoren ermöglicht wird.

### Aufgabe der Erfindung

Es ist Aufgabe der Erfindung eine Steuervorrichtung und ein Verfahren zum Steuern einer sicherheitsrelevanten Komponente vorzuschlagen, die wenig fehleranfällig sind und mit denen ein hohes Sicherheitsniveau realisiert werden kann.

### Beschreibung der Erfindung

Diese Aufgabe wird erfindungsgemäß gelöst durch eine Steuervorrichtung gemäß Patentanspruch 1 sowie ein Verfahren gemäß Patentanspruch 13.

Die erfindungsgemäße Steuervorrichtung umfasst einen Transformator zur Ausgabe eines Steuersignals, eine H-Brückenschaltung mit zwei Schaltzweigen und einem Brückenzweig, wobei jeder Schaltzweig ein Schaltelemente-Paar bestehend aus zwei in Serie geschalteten Schaltelementen und der Brückenzweig als Last eine Primärspule des Transformators umfasst. Die erfindungsgemäße Steuervorrichtung umfasst weiterhin zwei voneinander unabhängige, synchronisierte Rechner, wobei jeder Rechner eines der Schaltelemente-Paare mit Hilfe von Steuerelementen, z.B. I/O-Ports steuert, wobei die Rechner dazu eingerichtet sind, im Falle eines Schaltbefehls die Schaltelemente jedes Schaltelement-Paares abwechselnd in einer vorgegebenen Frequenz zu öffnen und zu schließen, so dass der Transformator mit einer Wechselspannung der vorgegebenen Frequenz versorgt wird.

Die Steuerelemente werden von den Rechnern so angesteuert, dass in jedem Schaltelement-Paar zu jeder Zeit jeweils ein Schaltelement geöffnet und ein Schaltelement geschlossen ist. Um die Schaltbefehle der beiden Rechner an die Schaltelemente aufeinander abzustimmen, sind die beiden Rechner synchronisiert. Zusätzlich zu jedem Schaltelemente-Paar können in jedem Schaltzweig weitere Schaltelemente vorhanden sein, insbesondere um die Verfügbarkeit zu erhöhen (Redundanz).

Transformatoren haben die unverlierbare physikalische Eigenschaft, dass eine Energieübertragung nur bei Beaufschlagung mit Wechselstrom erfolgt. Durch die erfindungsgemäße Ansteuerung der H-Brücke (Transistorbrücke) wird eine Wechselspannung erzeugt, wodurch über den Transformator ein Steuersignal an die zu steuernde sicherheitsrelevante Komponente ausgegeben wird. Gemäß der Erfindung wird der Transformator gemeinsam von zwei (im Sinne der zum Anmeldezeitpunkt geltenden Norm DIN EN 50129) unabhängigen Rechnern (Mikrokontroller) gesteuert, wobei jeder Rechner einen Spannungspol des Transformators steuert. Wenn einer der Rechner keinen Schaltbefehl mehr ausgibt, oder einer der Schalter nicht mehr schaltet, wird der Strom in der Primärspule nicht mehr umgepolt und es findet keine Energieübertragung im Trafo mehr statt bzw. die vom Transformator ausgegebene Spannung fällt auf einen sehr kleinen Wert ab, wodurch ein Abschalten des Stromflusses durch die Steuervorrichtung initiiert werden kann. Die Steuervorrichtung macht sich also selbst wirkungslos und wird somit in einen sicheren Zustand überführt. Auf diese Weise kann das für bahnsicherheitstechnische Komponenten erforderliche SIL4-Level erreicht werden.

Erfindungsgemäß sind Überwachungselemente zur Überwachung der Schaltzustände der Schaltelemente vorhanden. Die Überwachungselemente detektieren ein Signal betreffend den Schaltzustand des jeweiligen Schaltelements, welches an den zugehörigen Rechner (also den Rechner, der für die Steuerung des betreffenden Schaltelements zuständig ist) übermittelt wird, so dass kontrolliert werden kann, ob das Schaltelement korrekt funktioniert. Dies erfolgt im Allgemeinen durch Vergleich des Schaltzustands, der anhand des übermittelten Signals ermittelt wurde, mit einem Soll-Schaltzustand, der im Rechner hinterlegt ist).

Gemäß der Erfindung sind die Überwachungselemente jeweils mit beiden Rechnern verbunden zur Übertragung eines den Schaltzustand des jeweiligen Schaltelements betreffenden Signals an beide Rechner. Dies stellt eine Möglichkeit dar, die Rechner zu synchronisieren. Die Sicherheit kann weiter erhöht werden wenn einer der Rechner keine Schaltbefehle mehr ausgibt, sobald er erkennt, dass der andere Rechner keine Schaltbefehle mehr ausgibt oder die ihm zugeordneten Schaltelemente nicht mehr schalten.

Um trotz der Verbindung der beiden Rechner über die Überwachungselemente die Unabhängigkeit der beiden Rechner zu gewährleisten, ist bei einer bevorzugten Ausführungsform vorgesehen, dass die von einem der Rechner angesteuerten Schaltelemente über Leitungen mit jeweils einem Widerstand in Sicherheitsbauform mit dem jeweils anderen Rechner verbunden sind. Durch die Sicherheitsbauweise wird garantiert, dass sich bei einem Defekt der Widerstandswert nur erhöhen, jedoch nicht verringern kann, so dass ein Kurzschluss sicher vermieden werden kann. "Garantiert" bedeutet in diesem Zusammenhang, dass die Wahrscheinlichkeit für eine Widerstandsverringerung so extrem klein ist, dass man dieses Ereignis als ausgeschlossen betrachtet. Diese Eigenschaft des Bauelements gilt als unverlierbar, solange keine Überlastung des Bauelementes eintritt. Der Überlastungsfall muss daher durch die Schaltung und Dimensionierung der Bauelemente ausgeschlossen werden.

Bei einer besonders bevorzugten Ausführungsform sind die Überwachungselemente Optokoppler, die jeweils parallel zu einem der Schaltelemente geschaltet sind. Die Schaltelemente können dadurch galvanisch getrennt von dem entsprechenden Rechner angesteuert werden.

Zur Synchronisation können die beiden Rechner über eine Datenleitung miteinander verbunden sein. Informationen betreffend die Schaltbefehle zum Umschalten der Schaltelemente können somit direkt zwischen den beiden Rechnern ausgetauscht werden (alternativ oder zusätzlich zur Informationsübertragung der Überwachungselemente an beide Rechner).

Darüber hinaus kann es vorteilhaft sein, wenn die beiden Rechner als Master-Slave-Konfiguration ausgebildet sind.

Vorzugsweise liegt eine galvanische Trennung zwischen den beiden Rechnern und/oder zwischen jeweils einem Rechner und den von diesem Rechner angesteuerten Schaltelementen vor. Hierdurch können Fehlerquellen minimiert werden.

Eine galvanische Trennung zwischen Rechnern und Schaltelementen kann beispielsweise dadurch realisiert werden, dass als Steuerelemente Optokoppler dienen. Durch die inhärenten Eigenschaften der Optokoppler sind Rechner und Schaltelemente galvanisch voneinander getrennt und eine Datenübertragung kann nur in einer Richtung erfolgen. Eine Manipulation der Datenübertragungsrichtung in den Mikrokontrollern durch Software kann somit ausgeschlossen werden. Alternativ hierzu können als Steuerelemente auch Übertrager zum Einsatz kommen.

Bei einer besonders bevorzugten Ausführungsform ist dem Transformator ein Gleichrichter nachgeschaltet. Somit können sicherheitsrelevante Komponenten mit Gleichstrom betrieben werden. Dies ist insbesondere dort vorteilhaft, wo ein sicherer Zustand hergestellt werden kann, indem die Elektronik ausgeschaltet wird. Also z.B. für den Betrieb von LED-Signalen (sicherer Zustand = LED aus), für die Ansteuerung von Gleichstromrelais (sicherer Zustand = Relais stromlos), für die Versorgungsspannung für sichere Rechnersysteme (sicherer Zustand = Rechner abgeschaltet) oder für die Erzeugung von Fernsteuersignalen mit Vorzugsausfallrichtung (Signalleitung kann bei Defekt der Steuereinheit nicht im EIN-Zustand verbleiben, sondern wird IMMER in den AUS-Zustand wechseln; z. B. für Block-Information "Strecke frei", Ansteuerung von Bahnübergängen mit automatischem Schließen bei Ausfall der Fernsteuerung, usw.). Ein "sicherer Zustand" bedeutet dabei ein Verhalten der Technik, welches keine Gefährdung des Betriebs (Personen und Material) darstellt und welches unabhängig vom aufgetretenen Fehler immer erreichbar ist.

Die Vorteile der Erfindung kommen besonders zur Geltung, wenn die Steuervorrichtung Teil einer Achszählvorrichtung ist.

Die Erfindung findet vorzugsweise im Bahnbereich Anwendung. Die sicherheitsrelevante Komponente kann dann beispielsweise eine Signallampe, eine Gleisfreimeldeanlage oder eine Bahnübergangsschranke sein.

Die Erfindung betrifft auch ein Verfahren zur Steuerung einer sicherheitsrelevanten Komponente mit einer zuvor beschriebenen Steuervorrichtung, wobei die Rechner der Steuervorrichtung im Falle eines eingegebenen Schaltbefehls die Schaltelemente jedes Schaltelement-Paares abwechselnd in einer vorgegebenen Frequenz öffnen und schließen, so dass der Transformator mit einer Wechselspannung der vorgegebenen Frequenz versorgt wird.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine erste Ausführungsform der erfindungsgemäßen Steuervorrichtung mit Synchronisation über eine Datenleitung.
- Fig. 2: zeigt eine Weiterbildung der in Fig. 1 gezeigten Ausführungsform der erfindungsgemäßen Steuervorrichtung mit Ansteuerung der Schalter über Optokoppler und Gleichrichter.
- Fig. 3: zeigt eine weitere Ausführungsform der erfindungsgemäßen Steuervorrichtung mit Synchronisation über Überwachungselemente.
- Fig. 4: zeigt eine Weiterbildung der in Fig. 3 gezeigten Ausführungsform der erfindungsgemäßen Steuervorrichtung mit zusätzlicher Synchronisation über eine Datenleitung.

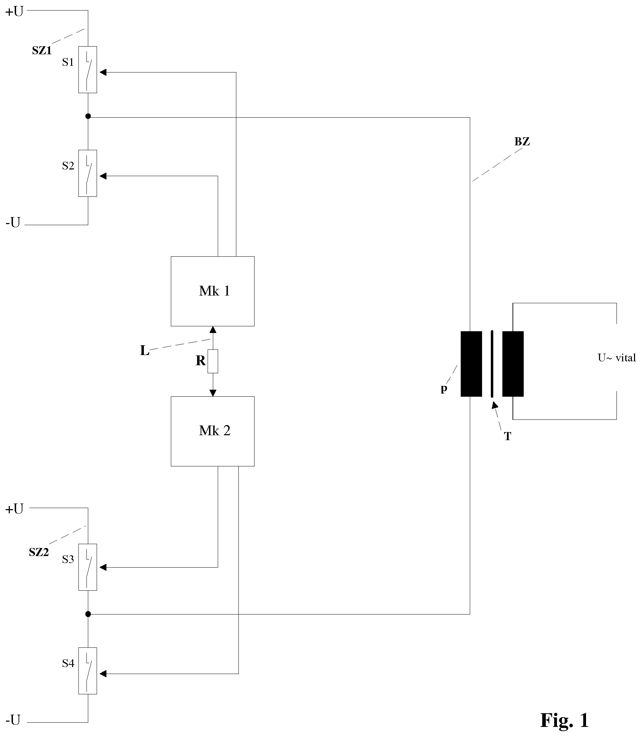

**Fig. 1** zeigt die Grundkonfiguration der erfindungsgemäßen Steuervorrichtung.

Die erfindungsgemäße Steuervorrichtung umfasst eine H-Brückenschaltung mit zwei Schaltzweigen **SZ1, SZ2** und einem Brückenzweig **BZ.** In jedem Schaltzweig SZ1, SZ2 ist ein Schaltelemente-Paar S1/S2, S3/S4 mit jeweils zwei in Serie geschalteten Schaltelementen **S1, S2, S3, S4** angeordnet. Die H-Brückenschaltung wird über eine Gleichspannungsquelle mit Strom versorgt, wobei von jedem Schaltelemente-Paar S1/S2, S3/S4 jeweils ein Schaltelement S1, S3 am Pluspol und das andere Schaltelement S2, S4 am Minuspol der Spannungsquelle angeschlossen ist. Die Schalter S1, S2 des ersten Schaltelement-Paares S1/S2 werden von einem ersten Rechner **MK1,** die Schalter S3, S4 des zweiten Schaltelement-Paares S3/S4 von einem zweiten Rechner **MK2** angesteuert. Mittels der Schaltelemente S1, S2, S3, S4 wird ein Transformator **T** mit Wechselspannung versorgt, dessen Primärspule **P** Teil des Brückenzweiges BZ der H-Brückenschaltung (Last) ist. Dazu schalten die beiden Rechner MK1, MK2 die Schaltelemente S1, S2, S3, S4 so, dass abwechselnd entweder die Schaltelemente S1 und S4 oder die Schaltelemente S2 und S3 gemeinsam geschlossen sind, so dass Strom durch die Primärspule P des Transformators T fließt. Durch zyklisches Ändern der Schaltungszustände der Schaltelemente S1, S2, S3, S4 wird ein Wechselstrom durch den Transformator T erzeugt und der Transformator T kann ein Steuersignal an eine zu steuernde Komponente (nicht gezeigt) abgeben. Die Schaltfrequenz der Schaltelemente und damit die dadurch erzeugte Wechselspannung beträgt mindestens 1kHz, vorzugsweise mehr als 50 kHz und ist begrenzt durch die Synchronisierungsfrequenz und Transformatoreigenschaften, insbesondere Induktivität der Spulen und Hysterese des Eisenkerns.

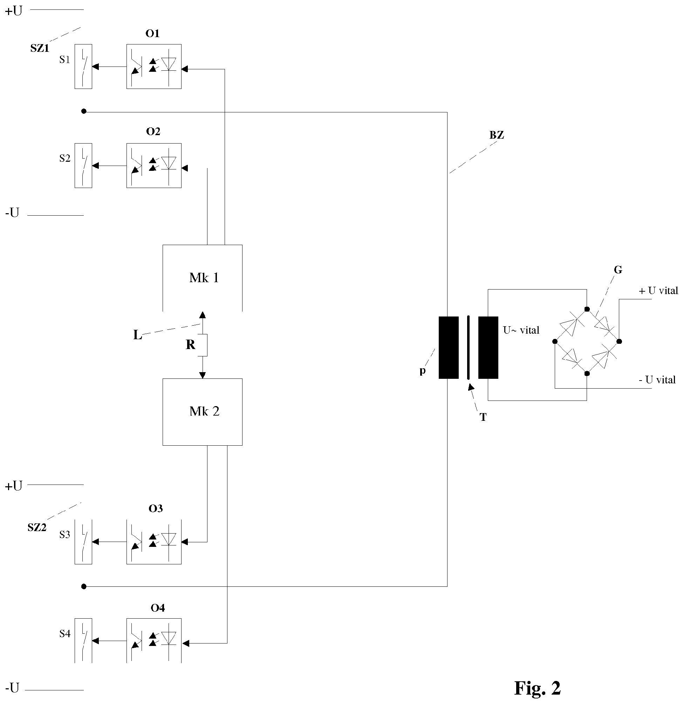

Die Ansteuerung der Schaltelemente S1, S2, S3, S4 erfolgt vorzugsweise über Optokoppler **O1, O2, O3, O4,** wie in **Fig. 2** gezeigt, so dass die Rechner von den Schaltelementen galvanisch getrennt sind.

Um die anzusteuernde sicherheitsrelevante Komponente mit Gleichstrom zu betreiben, ist bei der in Fig. 2 gezeigten Ausführungsform dem Transformator T ein Gleichrichter **G** nachgeschaltet.

Bei den in Fig. 1 und 2 gezeigten Ausführungsformen sind die beiden Rechner MK1, MK2 über eine Datenleitung **L** mit einem Widerstand R in Sicherheitsbauweise miteinander verbunden und können so miteinander synchronisiert werden.

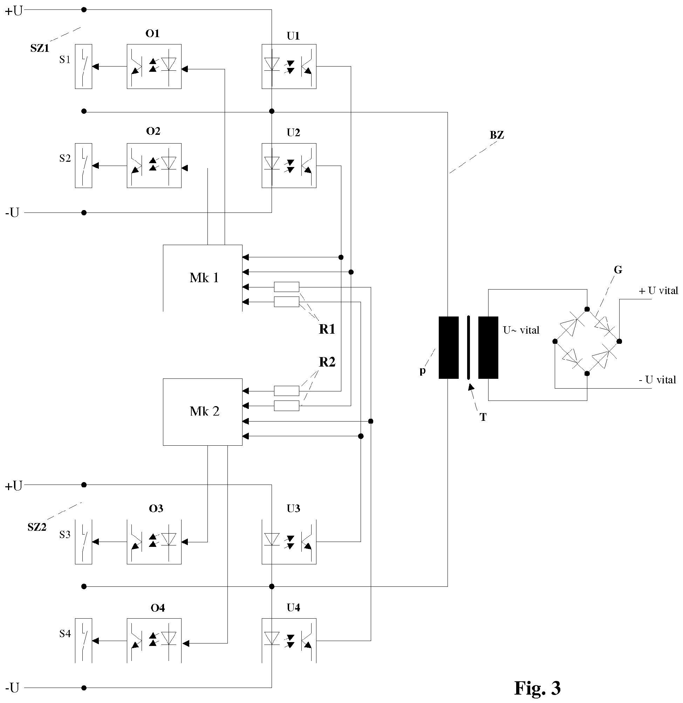

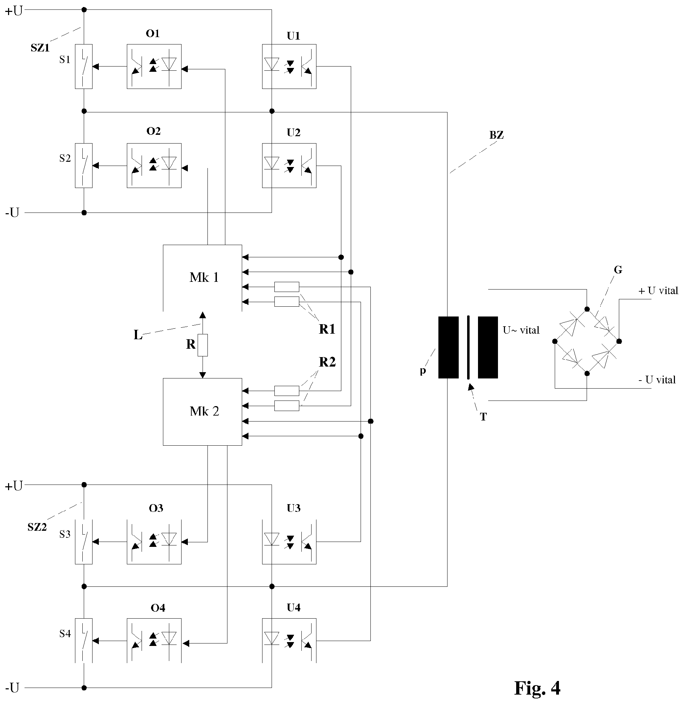

In den in **Fig. 3** und **Fig. 4** gezeigten Ausführungsformen sind Überwachungselemente **U1, U2, U3, U4** vorgesehen, die beispielsweise als Optokoppler ausgeführt sein können und zur Überwachung der Schaltzustände der Schaltelemente S1, S2, S3, S4 während des Betriebs dienen. Dazu werden von den Überwachungselementen U1, U2, U3, U4 Schaltzustandssignale detektiert, die an den das entsprechende Schaltelement steuernden Rechner übermittelt werden. Ein Abschalten eines Kanals zum Testen der Funktionsfähigkeit des entsprechenden Kanals ist bei dieser Ausführungsform aufgrund des zyklischen Änderns der Zustände aller Schaltelemente nicht notwendig.

Zusätzlich ist bei den in Fig. 3 und Fig. 4 gezeigten Ausführungsformen vorgesehen, dass die Schaltzustandssignale an den jeweils anderen Rechner (also den Rechner, der nicht für die Steuerung des entsprechenden Schaltelements zuständig ist) übermittelt werden. Auf diese Weise kann alternativ (Fig. 3) oder zusätzlich (Fig. 4) zur Synchronisation über die Datenleitung L eine Synchronisation der beiden Rechner MK1, MK2 mit Hilfe der Überwachungselemente U1, U2, U3, U4 erfolgen. Um trotzdem die Unabhängigkeit der beiden Rechner MK1, MK2 zu gewährleisten, ist der erste Rechner MK1 mit den Überwachungselementen U3, U4 und der zweite Rechner MK2 mit den Überwachungselementen U1, U2 über jeweils eine Leitung mit einem Widerstand **R1, R2** in Sicherheitsbauform verbunden.

Durch die erfindungsgemäße abwechselnde Stromversorgung eines Transformators mittels einer H-Brückenschaltung, deren Schaltelemente über zwei unabhängige Rechner gesteuert werden, wird eine einfache und zuverlässige Ansteuerung von sicherheitsrelevanten Komponenten realisiert, wobei ein sicheres Abschalten bei Ausfall eines Schaltelements oder eines Rechners gewährleistet ist.

### Bezugszeichenliste

- BZ: Brückenzweig
- G: Gleichrichter
- L: Datenleitung
- MK1, MK2: Rechner
- O1, O2, O3, O4: Optokoppler
- P: Primärspule
- R, R1, R2: Widerstände in Sicherheitsbauform
- S1, S2: Schaltelemente des ersten Schaltelemente-Paars
- S3, S4: Schaltelemente des zweiten Schaltelemente-Paars
- SZ1, SZ2: Schaltzweigen
- T: Transformator
- U1, U2, U3, U4: Überwachungselemente

## Patentansprüche

1. Steuervorrichtung zur Steuerung einer sicherheitsrelevanten Komponente, wobei die Steuervorrichtung umfasst:
einen Transformator (T) zur Ausgabe eines Steuersignals,
eine H-Brückenschaltung mit zwei Schaltzweigen (SZ1, SZ2) und einem Brückenzweig (BZ), wobei jeder Schaltzweig (SZ1, SZ2) ein Schaltelemente-Paar bestehend aus zwei in Serie geschalteten Schaltelementen (S1, S2, S3, S4) und der Brückenzweig (BZ) als Last eine Primärspule (P) des Transformators (T) umfasst, wobei sich der Brückenzweig von einem Punkt zwischen den Schaltelementen (S1, S2) des ersten Schaltzweiges (SZ1) zu einem Punkt zwischen den Schaltelementen (S3, S4) des zweiten Schaltzweiges (SZ2) erstreckt, und
zwei voneinander unabhängige, synchronisierte Rechner (MK1, MK2), wobei jeder Rechner (MK1, MK2) eines der Schaltelemente-Paare mit Hilfe von Steuerelementen steuert, wobei die Rechner (MK1, MK2) dazu eingerichtet sind, im Falle eines Schaltbefehls die Schaltelemente (S1, S2, S3, S4) jedes Schaltelement-Paares abwechselnd in einer vorgegebenen Frequenz zu öffnen und zu schließen, so dass der Transformator (T) mit einer Wechselspannung der vorgegebenen Frequenz versorgt wird,
wobei Überwachungselemente (U1, U2, U3, U4) zur Überwachung der Schaltzustände der Schaltelemente (S1, S2, S3, S4) vorhanden sind, die jeweils mit beiden Rechnern (MK1, MK2) verbunden sind zur Übertragung eines den Schaltzustand des jeweiligen Schaltelements (S1, S2, S3, S4) betreffenden Signals an beide Rechner (MK1, MK2).

2. Steuervorrichtung nach Anspruch 1, **dadurch gekennzeichnet, dass** die von einem der Rechner (MK1, MK2) angesteuerten Schaltelemente (S1, S2, S3, S4) über Leitungen mit jeweils einem Widerstand (R1,R2) in Sicherheitsbauform mit dem jeweils anderen Rechner (MK1, MK2) verbunden sind.

3. Steuervorrichtung nach einem der Ansprüche 1 bis 2, **dadurch gekennzeichnet, dass** die Überwachungselemente (U1, U2, U3, U4) Optokoppler sind, die jeweils parallel zu einem der Schaltelemente (S1, S2, S3, S4) geschaltet sind.

4. Steuervorrichtung nach einem der vorhergehenden Ansprüche, **dadurch gekennzeichnet, dass** die beiden Rechner (MK1, MK2) zur Synchronisierung über eine Datenleitung (L) miteinander verbunden sind.

5. Steuervorrichtung nach einem der vorhergehenden Ansprüche, **dadurch gekennzeichnet, dass** die beiden Rechner (MK1, MK2)als Master-Slave-Konfiguration ausgebildet sind.

6. Steuervorrichtung nach einem der vorhergehenden Ansprüche, **dadurch gekennzeichnet, dass** eine galvanische Trennung zwischen den beiden Rechnern (MK1, MK2) und/oder zwischen jeweils einem Rechner (MK1, MK2) und den von diesem Rechner (MK1, MK2) angesteuerten Schaltelementen (S1, S2, S3, S4) vorliegt.

7. Steuervorrichtung nach Anspruch 6, **dadurch gekennzeichnet, dass** als Steuerelemente Optokoppler (O1, O2, O3, O4) dienen.

8. Steuervorrichtung nach einem der vorhergehenden Ansprüche, **dadurch gekennzeichnet, dass** dem Transformator (T) ein Gleichrichter (G) nachgeschaltet ist.

9. Steuervorrichtung nach einem der vorhergehenden Ansprüche, **dadurch gekennzeichnet, dass** die Steuervorrichtung Teil einer Achszählvorrichtung ist.

10. Steuervorrichtung nach einem der vorhergehenden Ansprüche, **dadurch gekennzeichnet, dass** die sicherheitsrelevante Komponente eine Signallampe, eine Gleisfreimeldeanlage oder eine Bahnübergangsschranke ist.

11. Verfahren zur Steuerung einer sicherheitsrelevanten Komponente mit einer Steuervorrichtung gemäß einem der vorhergehenden Ansprüche, wobei die Rechner (MK1, MK2) der Steuervorrichtung im Falle eines eingegebenen Schaltbefehls die Schaltelemente (S1, S2, S3, S4) jedes Schaltelement-Paares abwechselnd in einer vorgegebenen Frequenz öffnen und schließen, so dass der Transformator (T) mit einer Wechselspannung der vorgegebenen Frequenz versorgt wird.

## Claims

1. A control device for controlling a safety-relevant component, the control device comprising:
a transformer (T) for outputting a control signal,
an H bridge circuit that has two switching branches (SZ1, SZ2) and a bridge branch (BZ), wherein each switching branch (SZ1, SZ2) includes a pair of switching elements made up of two switching elements (S1, S2, S3, S4) switched in series, and the bridge branch (BZ) includes a primary coil (P) of the transformer (T) as a load, wherein the bridge branch extends from a point between the switching elements (S1, S2) of the first switching branch (SZ1) to a point between the switching elements (S3, S4) of the second switching branch (SZ2), and
two independent, synchronized computers (MK1, MK2), wherein each computer (MK1, MK2) controls one of the switching element pairs with the aid of control elements, wherein the computers (MK1, MK2), in the event of a switching command, are configured to open and close the switching elements (S1, S2, S3, S4) of each switching element pair in alternation at a predefined frequency, so that the transformer (T) is supplied with an alternating voltage of the predefined frequency,
wherein monitoring elements (U1, U2, U3, U4) for monitoring the switching states of the switching elements (S1, S2, S3, S4) are present, and are each connected to both computers (MK1, MK2) for transmitting a signal concerning the switching state of the particular switching element (S1, S2, S3, S4) to both computers (MK1, MK2).

2. The control device according to Claim 1, **characterized in that** the switching elements (S1, S2, S3, S4) controlled by one of the computers (MK1, MK2) are connected to the respective other computer (MK1, MK2) via lines, each having a resistor (R1, R2) in a safety design.

3. The control device according to one of Claims 1 to 2, **characterized in that** the monitoring elements (U1, U2, U3, U4) are optocouplers that are each connected in parallel to one of the switching elements (S1, S2, S3, S4).

4. The control device according to one of the preceding claims, **characterized in that** the two computers (MK1, MK2) are connected to one another for synchronization via a data line (L).

5. The control device according to one of the preceding claims, **characterized in that** the two computers (MK1, MK2) are designed as a master-slave configuration.

6. The control device according to one of the preceding claims, **characterized in that** there is a galvanic separation between the two computers (MK1, MK2), and/or between each computer (MK1, MK2) and the switching elements (S1, S2, S3, S4) controlled by this computer (MK1, MK2).

7. The control device according to Claim 6, **characterized in that** optocouplers (O1, O2, O3, O4) are used as control elements.

8. The control device according to one of the preceding claims, **characterized in that** a rectifier (G) is connected downstream from the transformer (T).

9. The control device according to one of the preceding claims, **characterized in that** the control device is part of an axle counting device.

10. The control device according to one of the preceding claims, **characterized in that** the safety-relevant component is a signal light, a clear track signaling system, or a railroad crossing barrier.

11. A method for controlling a safety-relevant component using a control device according to one of the preceding claims, wherein in the event of an input switching command, the computers (MK1, MK2) of the control device open and close the switching elements (S1, S2, S3, S4) of each switching element pair in alternation at a predefined frequency, so that the transformer (T) is supplied with an alternating voltage of the predefined frequency.

## Revendications

1. Dispositif de commande d'un composant relevant de la sécurité, le dispositif de commande comprenant :
un transformateur (T) pour l'émission d'un signal de commande,
un pont en H avec deux branches de commutation (SZ1, SZ2) et une branche de pont (BZ), chaque branche de commutation (SZ1, SZ2) comprenant une paire d'éléments de commutation, constituée de deux éléments de commutation disposés en série (S1, S2, S3, S4), et la branche de pont (BZ) comprenant une bobine primaire (P) du transformateur (T) comme charge, la branche de pont s'étendant d'un point entre les éléments de commutation (S1, S2) de la première branche de commutation (SZ1) jusqu'à un point entre les éléments de commutation (S3, S4) de la deuxième branche de commutation (SZ2), et
deux calculateurs indépendants l'un de l'autre synchronisés (MK1, MK2), chacun des calculateurs (MK1, MK2) commandant l'une des paires d'éléments de commutation, les calculateurs (MK1, MK2) étant arrangés, en cas d'une instruction de commande, pour ouvrir et fermer les éléments de commutation (S1, S2, S3, S4) de chacune des paires d'éléments de commutation, alternativement, à une fréquence prédéterminée, de manière à ce que le transformateur (T) soit alimenté par une tension alternative de la fréquence prédéterminée,
des éléments de surveillance (U1, U2, U3, U4) pour surveiller les états de commutation des éléments de commutation (S1, S2, S3, S4) étant présents, liés à chacun des deux calculateurs (MK1, MK2), pour transmettre un signal correspondant à l'état de commutation de chaque élément de commutation (S1, S2, S3, S4) aux deux calculateurs (MK1, MK2).

2. Dispositif de commande selon la revendication 1, **caractérisé en ce que** les éléments de commutation (S1, S2, S3, S4) commandés par l'un des calculateurs (MK1, MK2) sont liés à l'autre calculateur (MK1, MK2) via des liaisons comprenant chacune une résistance (R1,R2) de type résistance de sécurité.

3. Dispositif de commande selon les revendications 1 à 2, **caractérisé en ce que** les éléments de surveillance (U1, U2, U3, U4) sont des coupleurs optiques, chacun de ces coupleurs optiques étant disposé en parallèle à l'un des éléments de commutation (S1, S2, S3, S4).

4. Dispositif de commande selon l'une des revendications précédentes, **caractérisé en ce que** les deux calculateurs (MK1, MK2) sont liés l'un à l'autre via une liaison de données (L) en vue de la synchronisation.

5. Dispositif de commande selon l'une des revendications précédentes, **caractérisé en ce que** les deux calculateurs (MK1, MK2) sont configurés dans une configuration maître-esclave.

6. Dispositif de commande selon l'une des revendications précédentes, **caractérisé en ce qu'**une isolation galvanique est présente entre les deux calculateurs (MK1, MK2) et/ou entre l'un des calculateurs (MK1, MK2) et les éléments de commutation (S1, S2, S3, S4) commandés par ce calculateur (MK1, MK2).

7. Dispositif de commande selon la revendication 6, **caractérisé en ce que** des coupleurs optiques (O1, O2, O3, O4) servent d'éléments de commande.

8. Dispositif de commande selon l'une des revendications précédentes, **caractérisé en ce qu'**un redresseur de courant (G) est disposé en aval du transformateur (T).

9. Dispositif de commande selon l'une quelconque des revendications précédentes, **caractérisé en ce que** le dispositif de commande est un dispositif de comptage d'essieux.

10. Dispositif de commande selon l'une quelconque des revendications précédentes, **caractérisé en ce que** le composant relevant de la sécurité est une lampe de signalisation, une installation de signalisation de libération de voie, ou une barrière levante de passage à niveau.

11. Procédé de commande d'un composant relevant de la sécurité à l'aide du dispositif de commande selon l'une des revendications précédentes, les calculateurs (MK1, MK2) du dispositif de commande, en cas de saisie d'une instruction de commande, ouvrant et fermant les éléments de commutation (S1, S2, S3, S4) de chacune des paires d'éléments de commutation, alternativement, à une fréquence prédéterminée, de manière à ce que le transformateur (T) soit alimenté par une tension alternative de la fréquence prédéterminée.
